# EUROPEAN PATENT APPLICATION

(11) **EP 4 783 312 A1**
(43) Date of publication of application: **29.07.2026**
(21) Application number: 25221538.9
(22) Date of filing: 08.12.2025
(51) Int. Cl.: H01M 50/15, H01M 50/164, H01M 50/557, H01M 50/586, H01M 50/593

(54) **CAP ASSEMBLY, SECONDARY BATTERY AND BATTERY PACK**

(30) Priority: 24.01.2025 KR 20250011128
(71) Applicant: SAMSUNG SDI CO., LTD., Yongin-si, Gyeonggi-do 17084 (KR)
(72) Inventor: YOON, Ji Hwan, 16678 Suwon-si (KR)
(74) Representative: Marks & Clerk LLP

(57) **Abstract**

A cap assembly, including a cap plate, an insulating plate on a surface of the cap plate, a coupling part extending from the cap plate toward the insulating plate, the coupling part being fixed to the insulating plate, the coupling part including a body extending toward the insulating plate, and a support on an end portion of the body, the support extending in a different direction from the body and is fixed to the insulating plate.

## Description

### BACKGROUND

### 1. Field

The present disclosure relates to a cap assembly, a secondary battery including the cap assembly, and a battery pack including the secondary battery.

### 2. Description of the Related Art

Generally, with the recent rapid spread of electronic devices using batteries such as mobile phones, notebook computers, and electric vehicles, the demand for secondary batteries having high energy density and high capacity is quickly increasing. Accordingly, the research and development for improving the performance of lithium secondary batteries is actively being conducted.

A lithium secondary battery is a battery including an electrolyte and positive and negative electrodes containing an active material capable of the intercalation and deintercalation of lithium ions and produces electric energy by oxidation and reduction reactions when the lithium ions are intercalated into and deintercalated from the positive and negative electrodes.

The secondary batteries are used in a single form or in the form of a battery module or battery pack in which multiple secondary batteries are connected to form a single unit.

The above information disclosed in this Background section is for enhancement of understanding of the background of the present disclosure, and therefore, it may contain information that does not constitute the related art.

### SUMMARY

Embodiments include a cap assembly, including a cap plate, an insulating plate on a surface of the cap plate, and a coupling part extending from the cap plate toward the insulating plate, the coupling part being fixed to the insulating plate.

The coupling part may include a body extending toward the insulating plate, and a support (located) on an end portion of the body, the support extending in a different direction from an extending direction of the body and is fixed to the insulating plate.

The insulating plate may include a through hole (through which the body passes), and the support may extend radially from the end portion of the body that has passed through the through hole.

The insulating plate may include a through hole (through which the body passes), and the support may extend from the end portion of the body that has passed through the through hole in a direction orthogonal to the extending direction of the body.

The support may include the end portion of the body fused to a lower portion of the insulating plate. Put another way, the support may be formed by fusing the end portion of the body to a lower portion of the insulating plate. The support may be formed on the end portion of the body fused to a surface of the insulating plate.

The coupling part may include a thermoplastic material.

The coupling part may include a material having a melting point of 160 °C or higher.

Embodiments include a secondary battery, including a case, an electrode assembly (disposed) inside the case, the electrode assembly including electrodes, and a cap assembly including terminals connected to the electrodes, the cap assembly being coupled to an opening of the case, wherein the cap assembly includes a cap plate coupled to the opening of the case, the cap plate having an insertion hole providing (or formed to provide) a passage through which the electrodes and the terminals are connected, an insulating plate (disposed) between the cap plate and the electrode assembly, and a coupling part extending from the cap plate toward the insulating plate, the coupling part being fixed to the insulating plate.

The coupling part may include a body extending toward the insulating plate, and a support (located) on an end portion of the body, the support extending in a different direction from an extending direction of the body and (being) fixed to the insulating plate.

The insulating plate may include a through hole (through which the body passes), and the support may extend radially from the end portion of the body that has passed through the through hole.

The insulating plate may include a through hole (through which the body passes), and the support may extend from the end portion of the body that has passed through the through hole in a direction orthogonal to the extending direction of the body.

The insulating plate may include a connection hole corresponding to (or formed to correspond to) the insertion hole, the connection hole provides a passage through which the electrodes and the terminals are connected.

The support may extend from the end portion of the body passing through (or extending along) the connection hole in a direction orthogonal to the extending direction of the body.

The support may be formed on (or include) the end portion of the body fused to a surface (or lower portion) of the insulating plate. Put another way, the support may be formed by fusing the end portion of the body to a surface (or lower portion) of the insulating plate.

The coupling part may include a thermoplastic material.

The coupling part may include a material having a melting point of 160 °C or higher.

The electrodes may include a first electrode and a second electrode, the electrode assembly may further include a first tab (being connected to the first electrode and) extending from the first electrode, the electrode assembly being connected to the first electrode, and a second tab (being connected to the second electrode and) extending from the second electrode, the second tab being spaced apart from the first tab (and connected to the second electrode), and the first tab and the second tab extend in a (or the) same direction.

The terminals may include a first terminal connected to the first electrode and a second terminal connected to the second electrode, the first terminal and the second terminal being spaced apart from each other, and the secondary battery may further include a first sub-plate (that is disposed) between the electrode assembly and the cap assembly, the first sub-plate connecting the first tab to the first terminal, and a second sub-plate (that is disposed) between the electrode assembly and the cap assembly, the second sub-plate connecting the second tab to the second terminal.

Embodiments include a battery pack, including a housing, and a plurality of secondary batteries (disposed) inside the housing, wherein each of the plurality of secondary batteries includes a case, an electrode assembly (disposed) inside the case, the electrode assembly including electrodes, and a cap assembly including terminals connected to the electrodes, the cap assembly being coupled to an opening of the case, wherein the cap assembly includes a cap plate coupled to the opening of the case, the cap plate having an insertion hole providing (or formed to provide) a passage through which the electrodes and the terminals are connected, an insulating plate (disposed) between the cap plate and the electrode assembly, and a coupling part extending from the cap plate toward the insulating plate, the coupling part being fixed to the insulating plate.

The coupling part may include an end portion fused to a surface (or lower portion) of the insulating plate. Put another way, the coupling part may be formed by fusing an end portion to a surface (or lower portion) of the insulating plate.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a schematic perspective view illustrating a configuration of a battery pack according to an embodiment of the present disclosure;
FIG. 2 is a schematic perspective view illustrating a configuration of a secondary battery according to an embodiment of the present disclosure;
FIG. 3 is a schematic exploded perspective view illustrating the configuration of the secondary battery according to an embodiment of the present disclosure;
FIG. 4 is a schematic view illustrating a configuration of an electrode assembly according to an embodiment of the present disclosure;
FIG. 5 is a schematic exploded perspective view illustrating a configuration of a cap assembly according to an embodiment of the present disclosure;
FIG. 6 is a schematic perspective view illustrating a configuration of the cap assembly according to an embodiment of the present disclosure;
FIG. 7 is a schematic exploded side view illustrating the configuration of the cap assembly according to an embodiment of the present disclosure;
FIG. 8 is a schematic bottom view illustrating a configuration of an insulating plate according to an embodiment of the present disclosure;
FIG. 9 is a schematic side view illustrating the configuration of the cap assembly according to an embodiment of the present disclosure;
FIG. 10 is a schematic enlarged view illustrating a configuration of a coupling part according to an embodiment of the present disclosure;
FIG. 11 is a schematic bottom view illustrating the configuration of the cap assembly according to an embodiment of the present disclosure;
FIG. 12 is a schematic exploded side view illustrating the configuration of the cap assembly according to an embodiment of the present disclosure;
FIG. 13 is a schematic side view illustrating the configuration of the cap assembly according to an embodiment of the present disclosure; and
FIG. 14 is a schematic bottom view illustrating the configuration of the cap assembly according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under the other layer, or one or more intervening layers may also be present. In addition, it will also be understood that when a layer is referred to as being "between" two layers, it can be the only layer between the two layers, or one or more intervening layers may also be present. Like reference numerals refer to like elements throughout.

Terms or words used in this specification and claims should not be interpreted as limited to their usual or dictionary meanings and should be interpreted as meanings and concepts that conform to the technical idea of the present disclosure based on the principle that the inventor can appropriately define the concepts of the terms in order to describe his or her own disclosure in the best way. The embodiments described in this specification and the configurations shown in the drawings are only some embodiments of the present disclosure and do not represent all of the technical ideas of the present disclosure. Accordingly, it should be understood that there may be various equivalents and modifications that can replace them at the time of filing this application.

In addition, when used in the present specification, "comprise" and "include" and/or "comprising" and "including" specify the presence of the stated shapes, numbers, steps, operations, members, elements, and/or groups thereof and do not preclude the presence or addition of one or more other shapes, numbers, steps, operations, members, elements, and/or groups thereof.

In addition, to facilitate understanding of the disclosure, the accompanying drawings are not drawn to scale, and the dimensions of some components may be shown in an exaggerated manner. In addition, the same reference numbers may denote the same components in different embodiments.

When two objects of comparison are "the same," it means that they are "substantially the same." Accordingly, "substantially the same" may include a deviation that is considered low in the art, for example, a deviation within 5%. In addition, uniformity of a parameter over a given region may mean uniformity from the viewpoint of an average.

Although "first," "second," etc. are used to describe various components, these components are not limited by these terms. These terms are used only to distinguish one component from another, and unless otherwise stated, it is obvious that a first component may be a second component.

Throughout the specification, unless otherwise stated, each element may be singular or plural.

When any component is disposed "above (or below)" or "on (or under)" a component, it may mean not only that any component is disposed in contact with an upper surface (or lower surface) of the component, but also that other components may be interposed between the component and any component disposed above (or below) or on (or under) the component.

In addition, when a certain component is stated as being "on," "connected to," or "coupled to" another component, it should be understood not only that the components may be directly connected or joined, but that still another component may be "interposed" between the components or that the components may be "connected," "coupled," or "joined" through still another component.

As used herein, the term "and/or" includes any and all combinations of one or more of the associated items listed. In addition, the use of "may" when describing embodiments of the present disclosure relates to "one or more embodiments of the present disclosure." Expressions, such as "at least one of" and "any one of," before a list of elements, modify the entire list of elements and do not modify the individual elements of the list.

Throughout the specification, when "A and/or B" is stated, it means A, B or A and B, unless otherwise stated, and when "C to D" is stated, it means C or more and D or less, unless otherwise specified.

When phrases such as "at least one of A, B, and C, "at least one selected from a group of A, B, and C," and "at least one selected from among A, B, and C" are used to designate a list of elements A, B, and C, the phrase may refer to any and all suitable combinations thereof.

The terms "use" may be considered synonymous with the terms "utilize." As used herein, the terms "substantially," "about," and similar terms are used as terms of approximation and not as terms of degree and are intended to account for the inherent variations in measured or calculated values that would be recognized by those of ordinary skill in the art.

It will be understood that, although the terms "first", "second", "third", etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, area, layer, or section, which will be discussed below, could be named a second element, component, area, layer, or section without departing from the teachings of example embodiments.

Spatially relative terms, such as "beneath," "below," "lower," "above," "upper," and the like, may be used herein for ease of description to describe a relationship of one element or feature to (an)other element(s) or feature(s) as illustrated in the drawings. It will be understood that the spatially relative terms are intended to encompass different orientations of the device in use or operation in addition to the orientations depicted in the drawings. For example, if a device in the drawings is turned over, elements described as "below" or "beneath" other elements would then be understood to be "above" or "over" the other elements. Thus, the term "below" may encompass both an orientation of above and below.

The terminology used herein is intended to describe embodiments of the present disclosure and is not intended to limit the present disclosure.

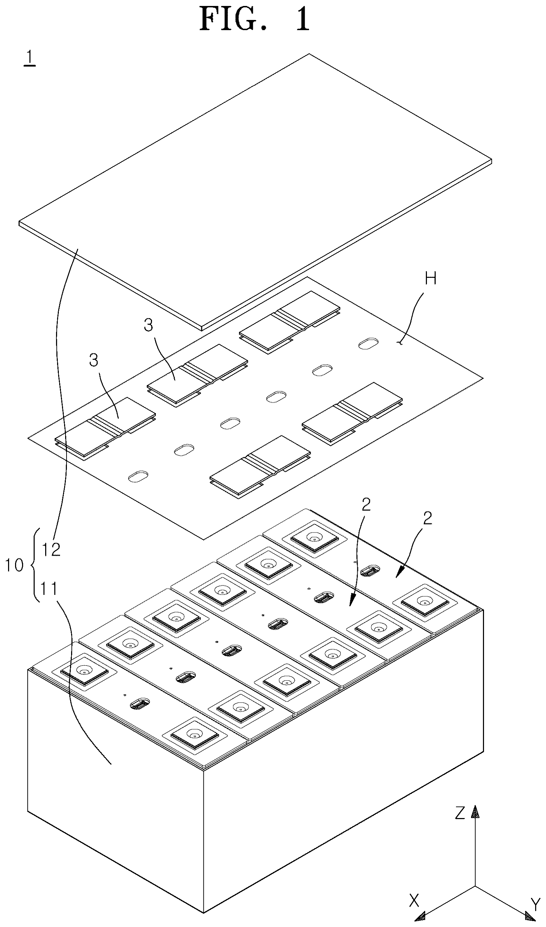

FIG. 1 is a schematic perspective view illustrating a configuration of a battery pack according to an embodiment of the present disclosure.

Referring to FIG. 1, a battery pack 1 according to an embodiment of the present disclosure may include a housing 10, a secondary battery 2, and a busbar 3.

The housing 10 may form an approximate exterior of the battery pack 1 and provide a space in which the secondary battery 2 may be accommodated.

The housing 10 according to an embodiment of the present disclosure may include a housing body 11 and a cover 12.

The housing body 11 may be formed to have a box shape with an empty interior and one open side. A cross-sectional shape of the housing body 11 may be designed to have various shapes, such as a polygon, circle, oval, and the like.

The cover 12 may be coupled to the housing body 11 and may close the internal space of the housing body 11. For example, the cover 12 may be formed to have a substantially plate shape and disposed to face the open side of the housing body 11. The cover 12 may be fixed to the housing body 11 by various types of coupling methods, such as bolting, welding, fitting, and the like.

The secondary battery 2 may serve as a unit structure that stores and supplies power in the battery pack.

The secondary battery 2 may be provided as a plurality of secondary batteries. The plurality of secondary batteries 2 may be arranged along two or more rows in at least one of a longitudinal direction (e.g. an X-axis direction based on FIG. 1) and a width direction (e.g. a Y-axis direction based on FIG. 1) of the housing 10. FIG. 1 illustrates an example in which the plurality of secondary batteries 2 are arranged in one row of six secondary batteries in a longitudinal direction of the housing 10, but the arrangement form of the plurality of secondary batteries 2 may be designed to have various forms. The plurality of secondary batteries 2 may be disposed in parallel. The number of secondary batteries 2 may be designed in various ways according to the size, shape, etc., of the housing 10.

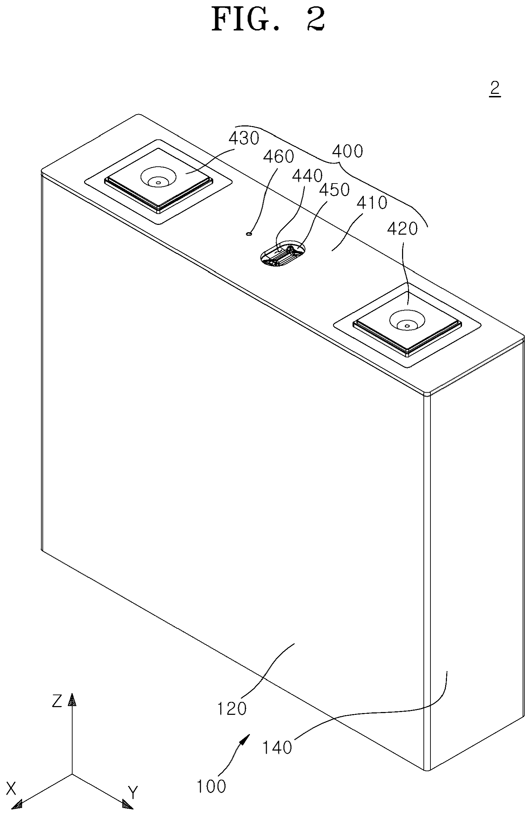

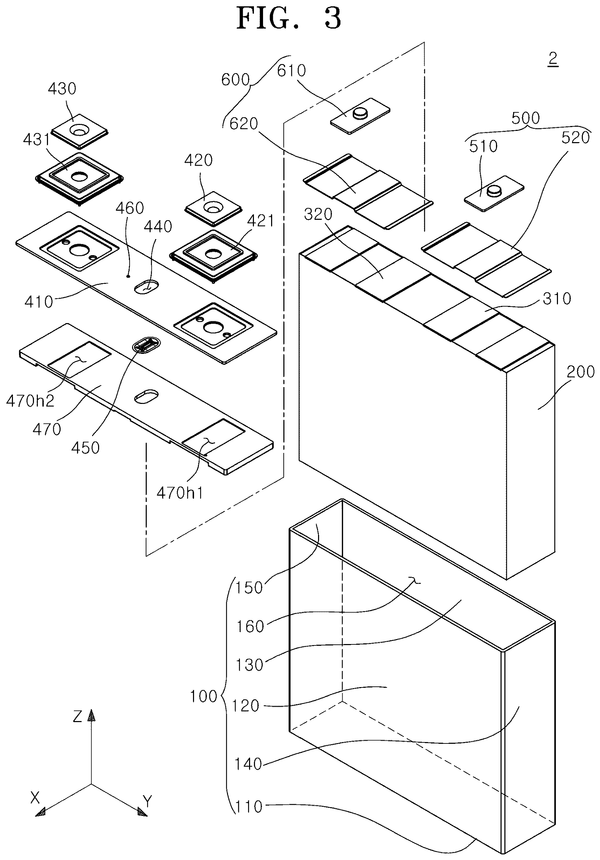

A first terminal 420 (see FIG. 2) of one of a pair of neighboring secondary batteries 2 and a second terminal 430 (see FIG. 2) of the other may be disposed to face each other in the longitudinal direction of the housing 10. That is, a front portion 120 (see FIG. 3) of one of a pair of neighboring secondary batteries 2 may be disposed to face a rear portion 130 (see FIG. 3) of the other.

A plurality of secondary batteries 2 may be electrically connected by the busbar 3.

The busbar 3 according to the present embodiment may be disposed between the cover 12 and the secondary battery 2. The busbar 3 may be provided as a plurality of busbars. Each busbar 3 may connect a pair of neighboring secondary batteries 2 in series or in parallel.

As an example, the busbar 3 may have both sides connected to the first terminal 420 of one of a pair of neighboring secondary batteries 2 and the second terminal 430 of the other, respectively. Accordingly, a plurality of secondary batteries 2 may be connected in series by the busbar 3.

However, both sides of the busbar 3 may be connected to the first terminal 420 of one of a pair of neighboring secondary batteries 2 and the first terminal 420 of the other respectively or connected to the second terminal 430 of one of a pair of neighboring secondary batteries 2 and the second terminal 430 of the other respectively.

The busbar 3 may be formed of an electrically conductive material such as copper, aluminum, nickel, or the like. The detailed shape of the busbar 3 may be designed to have various shapes that can electrically connect neighboring secondary batteries 2.

The plurality of busbars 3 may be supported inside the housing 10 by a busbar holder H.

The busbar holder H according to the present embodiment may be formed to have a flat plate shape. The busbar holder H may be disposed between the cover 12 and the secondary battery 2. The busbar 3 may be fixed to the busbar holder H by various types of coupling methods such as fitting, bolting, injection joining, and the like. The busbar holder H may include an electrically insulating polymer compound material.

Hereinafter, the secondary battery 2 according to various embodiments of the present disclosure will be described.

FIG. 2 is a schematic perspective view illustrating a configuration of a secondary battery according to an embodiment of the present disclosure.

FIG. 3 is a schematic exploded perspective view illustrating the configuration of the secondary battery according to an embodiment of the present disclosure.

A battery pack 1 (e.g., including the battery pack 1 described in FIG. 1) according to an embodiment of the present disclosure includes a housing 10 and a plurality of secondary batteries 2 (e.g., including the secondary batteries 2 described in FIG. 1) accommodated in the housing 10.

Hereinafter, an example in which the secondary battery 2 is a lithium-ion secondary battery in a prismatic battery type will be described. However, the secondary battery 2 may be a lithium polymer battery or cylindrical battery.

The secondary battery 2 according to an embodiment of the present disclosure includes a case 100, an electrode assembly 200 accommodated in the case 100, and a cap assembly 400 coupled to an opening 160 of the case 100.

The case 100 may form an approximate exterior of the secondary battery 2 and accommodate the electrode assembly 200.

For example, the case 100 may include a bottom portion 110, a front portion 120, a rear portion 130, a first side portion 140, and a second side portion 150.

The bottom portion 110 may form an exterior of a lower side (based on FIG. 3) of the case 100. For example, the bottom portion 110 may have a rectangular plate shape. The bottom portion 110 may be seated on a bottom surface of the housing body 11.

For example, the front portion 120, the rear portion 130, the first side portion 140, and the second side portion 150 may form an exterior of an outer surface of the case 100.

For example, the front portion 120, the rear portion 130, the first side portion 140, and the second side portion 150 may each have the shape of a plate that extends upward (based on FIG. 3) from an edge of the bottom portion 110. The front portion 120, the rear portion 130, the first side portion 140, and the second side portion 150 may be disposed to surround the space above the bottom portion 110. The front portion 120, the rear portion 130, the first side portion 140, and the second side portion 150 may be disposed to form a rectangular cross-sectional shape.

For example, the front portion 120 and the rear portion 130 may be disposed to face each other in the longitudinal direction of the housing 10. The front portion 120 and the rear portion 130 may be disposed in parallel. Areas of the front portion 120 and the rear portion 130 may be the same.

For example, the first side portion 140 and the second side portion 150 may be disposed to face each other in a width direction (e.g., Y-axis direction) of the housing 10. The first side portion 140 and the second side portion 150 may be disposed in parallel. Areas of the first side portion 140 and the second side portion 150 may be the same. The areas of the first side portion 140 and the second side portion 150 may be smaller than the areas of the front portion 120 and the rear portion 130.

The case 100 may further include an opening 160. The opening 160 may be a space surrounded by upper end portions of the front portion 120, the rear portion 130, the first side portion 140, and the second side portion 150. The opening 160 may interconnect the space inside and outside the case 100.

Accordingly, the case 100 according to an embodiment of the present disclosure may have a rectangular parallelepiped shape with an open upper side (in the orientation shown).

A first direction to be described below may be a direction parallel to a Z-axis based on FIG. 3 and a direction from the bottom portion 110 to the opening 160. A second direction may be a direction parallel to a Y-axis based on FIG. 3 and a direction from the first side portion 140 to the second side portion 150. A third direction may be a direction parallel to an X-axis based on FIG. 3 and a direction from the front portion 120 to the rear portion 130.

The electrode assembly 200 may serve as a unit structure that performs the charging and discharging operations of power in a secondary battery. The electrode assembly 200 may be accommodated inside the case 100.

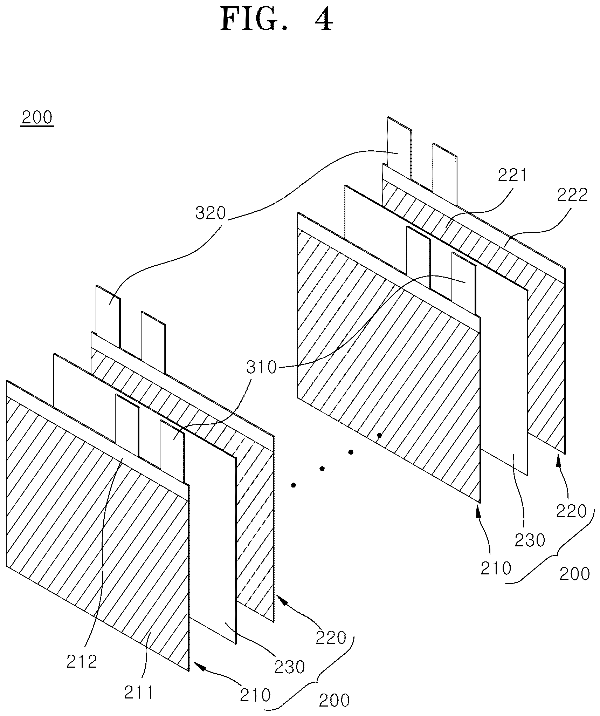

For example, the electrode assembly 200 includes a first electrode 210 (see FIG. 4), a second electrode 220 (see FIG. 4), and a separator 230 (see FIG. 4) located between the first electrode 210 and the second electrode 220. In addition, for example, the electrode assembly 200 further includes a first tab 310 electrically connected to the first electrode 210, and a second tab 320 electrically connected to the second electrode 220. The electrode assembly 200 will be described in more detail in FIG. 4 below.

In addition, for example, the secondary battery 2 further includes a first sub-plate 500 and a second sub-plate 600. For example, the first and second sub-plates 500 and 600, respectively, are disposed between the electrode assembly 200 and the cap assembly 400.

For example, the sub-plates include a first sub-plate 500 and a second sub-plate 600.

The first sub-plate 500 may connect the first terminal 420 and the first tab 310. The first sub-plate 500 may be formed of a conductive material. For example, the first sub-plate 500 may be formed of the same material as the first terminal 420.

For example, the first sub-plate 500 includes a first current collector 510 and a first current collector plate 520. The first current collector 510 may be connected to the first terminal 420. The first current collector plate 520 may be fixed to the first current collector 510 and connected to the first tab 310.

The second sub-plate 600 may connect the second terminal 430 and the second tab 320. The second sub-plate 600 may be formed of a conductive material. For example, the second sub-plate 600 may be formed of the same material as the second terminal 430.

For example, the second sub-plate 600 includes a second current collector 610 and a second current collector plate 620. The second current collector 610 may be connected to the second terminal 430. The second current collector plate 620 may be fixed to the second current collector 610 and connected to the second tab 320.

FIG. 4 is a schematic view illustrating a configuration of an electrode assembly according to an embodiment of the present disclosure.

A battery pack 1 (e.g., including the battery pack 1 described in FIGS. 1 to 3) according to an embodiment of the present disclosure includes a housing 10 and a plurality of secondary batteries 2 (e.g., including the secondary batteries 2 described in FIGS. 1 to 3) accommodated in the housing 10.

The secondary battery 2 according to an embodiment of the present disclosure includes the case 100, the electrode assembly 200 accommodated in the case 100, and the cap assembly 400 coupled to the opening 160 of the case 100.

The electrode assembly 200 according to an embodiment of the present disclosure may include the first electrode 210, the second electrode 220, and the separator 230 disposed between the first electrode 210 and the second electrode 220. The first electrode 210, the separator 230, and the second electrode 220 may be provided as a plurality of first electrodes, separators, and second electrodes respectively.

Hereinafter, an example in which the electrode assembly 200 has a stacked form in which the plurality of first electrodes 210, separators 230, and second electrodes 220 are stacked sequentially in the third direction will be described. However, the electrode assembly 200 may be formed to have a form in which the first electrodes 210, the separators 230, and the second electrodes 220 are stacked and wound about a winding axis clockwise or counterclockwise.

The first electrode 210 may serve as one of a positive electrode and a negative electrode of the electrode assembly 200. Hereinafter, an example in which the first electrode 210 is the positive electrode of the electrode assembly 200 will be described. However, the first electrode 210 may serve as the negative electrode of the electrode assembly 200.

The first electrode 210 according to an embodiment of the present disclosure may be formed to have the form of a foil including a metal material such as aluminum or an aluminum alloy. The type, size, shape, and the like of the first electrode 210 are not fixed, as long as the first electrode 210 has conductivity without causing a chemical change in a secondary battery. The cross-sectional shape of the first electrode 210 may be designed to have various shapes in addition to the rectangular shape illustrated in FIG. 4.

The first electrode 210 may be provided as a plurality of first electrodes. The plurality of first electrodes 210 may be arranged in the third direction between the front portion 120 and the rear portion 130 of the case 100. The number of first electrodes 210 may be designed to vary depending on the charging capacity or the like of the secondary battery 2.

At least a portion of the first electrode 210 may be coated with a first active material layer 211. Both surfaces of the first electrode 210 may be coated with the first active material layer 211, or in other embodiments, only one surface of the first electrode 210 may be coated with the first active material layer 211.

In the present embodiment, as the first electrode 210 serves as a positive electrode, the first active material layer 211 may include a positive electrode active material.

The positive electrode active material may be a compound capable of reversible intercalation and deintercalation of lithium (e.g. a lithiated intercalation compound). More specifically, as the positive electrode active material, one or more of composite oxides of lithium and a metal selected from cobalt, manganese, nickel, iron, and a combination thereof may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any material that is an electronically conductive material without causing a chemical change can be used. Examples of the positive electrode conductive material may include carbon-based materials, such as natural graphite, artificial graphite, carbon black, acetylene black, Ketjen black, carbon fibers, carbon nanofibers, carbon nanotubes, and the like, metal materials in the form of metal powder or metal fibers containing copper, nickel, aluminum, silver, and the like, conductive polymers, such as polyphenylene derivatives, and the like, or a mixture thereof.

The first active material layer 211 may further include a positive electrode binder.

The positive electrode binder serves to attach particles constituting the positive electrode active material to each other well and also serves to attach the positive electrode active material to the first electrode 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, a cellulose compound capable of imparting viscosity may be further included. As the cellulose compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of fiberization, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 that is not coated with the first active material layer 211. The first uncoated portion 212 according to the present embodiment may be disposed in an upper end area of the first electrode 210 disposed to face the opening 160 inside the case 100. However, the first uncoated portion 212 may be formed over the entire edge area of the first electrode 210.

The second electrode 220 may serve as the other of the positive electrode and negative electrode of the electrode assembly 200. Hereinafter, an example in which the second electrode 220 is the negative electrode of the electrode assembly 200 will be described. However, the second electrode 220 may serve as the positive electrode of the electrode assembly 200.

The second electrode 220 may be provided as a plurality of second electrodes. The plurality of second electrodes 220 may be arranged in the third direction (e.g., the X-axis direction) between the front portion 120 and the rear portion 130 of the case 100. The first electrode 210 and the second electrode 220 may be disposed alternately in the third direction. The second electrode 220 may be spaced a predetermined distance from the first electrode 210 in the third direction.

The second electrode 220 according to the present embodiment may be formed to have the form of a foil including a metal material such as copper, a copper alloy, nickel, a nickel alloy, or the like. The type, size, shape, and the like of the second electrode 220 may vary, as long as the second electrode 220 has conductivity without causing a chemical change in a secondary battery. The cross-sectional shape of the second electrode 220 may be designed to have various shapes in addition to the rectangular shape illustrated in FIG. 4.

At least a part of the second electrode 220 may be coated with a second active material layer 221. Both surfaces of the second electrode 220 may be coated with the second active material layer 221, or in other embodiments, only one surface of the second electrode 220 may be coated with the second active material layer 221.

As the second electrode 220 functions as a negative electrode, the second active material layer 221 may include a negative electrode active material.

The negative electrode active material may include a material capable of reversible intercalation/deintercalation of lithium ions, lithium metal, an alloy of lithium and a metal, a material capable of doping and dedoping lithium, or a transition metal oxide.

The material capable of reversibly intercalating/deintercalating lithium ions may include a carbon-based negative electrode active material, for example, crystalline carbon, amorphous carbon, or a combination thereof. An example of crystalline carbon may include graphite such as amorphous, plate-like, flaky, spherical, or fiber-like natural graphite or artificial graphite, and examples of amorphous carbon may include soft carbon, hard carbon, mesophase pitch carbide, calcined coke, etc.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn alloy, or a combination thereof.

The silicon-carbon composite may be a composite of silicon and amorphous carbon. According to an embodiment, the silicon-carbon composite may be in the form of silicon particles whose surfaces are coated with amorphous carbon. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any material that is an electrically conductive material without causing a chemical change can be used. Examples of the negative electrode conductive material may include carbon-based materials such as natural graphite, artificial graphite, carbon black, acetylene black, Ketjen black, carbon fibers, carbon nanofibers, carbon nanotubes, and the like, metal materials in the form of metal powder or metal fibers containing copper, nickel, aluminum, silver, and the like, conductive polymers such as polyphenylene derivatives and the like, or a mixture thereof.

The negative electrode binder serves to attach particles constituting the negative electrode active material to each other well and also serves to attach the negative electrode active material to the second electrode 220 well.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose compound capable of imparting viscosity may be further included. As the cellulose compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of fiberization, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 that is not coated with the second active material layer 221. The second uncoated portion 222 according to the present embodiment may be disposed in an upper end area of the second electrode 220 disposed to face the opening 160 inside the case 100. However, the second uncoated portion 222 may be formed over the entire edge area of the second electrode 220.

The separator 230 may be disposed between the first electrode 210 and the second electrode 220. The separator 230 may serve to prevent a short circuit between the first electrode 210 and the second electrode 220 while allowing the movement of lithium ions between the first electrode 210 and the second electrode 220.

The separator 230 may be disposed to entirely cover a surface area of the electrode assembly 200. Accordingly, the separator 230 can prevent the first electrode 210 and the second electrode 220 from being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer including an organic material, an inorganic material, or a combination thereof located on one surface or both (e.g., opposite) surfaces of the porous substrate.

The porous substrate may be a polymer film made of one polymer of polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon^{®}), or a copolymer or mixture of two or more thereof.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but this may vary.

The organic material and the inorganic material may be present as a mixture in one coating layer, or present in a form in which a coating layer containing an organic material and a coating layer containing an inorganic material are stacked.

The secondary battery 2 according to an embodiment of the present disclosure may include a first tab 310.

The first tab 310 may be connected to the first electrode 210 and may protrude outward from the first electrode 210. As the first electrode 210 is exemplified as a positive electrode, the first tab 310 may serve as a positive electrode tab of the secondary battery 2. However, when the first electrode 210 is a negative electrode, the first tab 310 may serve as a negative electrode tab of the secondary battery 2.

For example, the first tab 310 may extend from the first electrode 210in the first direction (e.g., the Z-axis direction). That is, the first tab 310 may extend toward the opening 160 inside the case 100.

For example, the first tab 310 may have the shape of a foil extending from the first uncoated portion 212 of the first electrode 210 in the first direction. The first tab 310 may have a substantially rectangular shape. However, the shape of the first tab 310 may be designed to have various shapes.

The first tab 310 may be formed integrally with the first electrode 210. For example, the first tab 310 may be the remaining area of the first uncoated portion 212, which remains after a part of the first uncoated portion 212 is cut or removed by notching processing, etc. In other embodiments, the first tab 310 may be manufactured separately from the first electrode 210 and then connected to the first uncoated portion 212 by welding, etc. Materials of the first tab 310 and the first electrode 210 may be the same.

The first tab 310 may be provided as a plurality of first tabs. The number of first tabs 310 and the number of first electrodes 210 may be the same. Each first tab 310 may extend from the first uncoated portion 212 of the first electrode 210. Neighboring first tabs 310 may be disposed to face each other in the third direction. The neighboring first tabs 310 may be disposed in parallel. Accordingly, the first tab 310 according to the present embodiment may be an assembly of the plurality of first tabs 310 stacked in the third direction. The neighboring first tabs 310 may be in contact with each other and may also be spaced apart from each other by a thickness of the separator 230.

The secondary battery 2 according to an embodiment of the present disclosure may include a second tab 320.

The second tab 320 may be connected to the second electrode 220 and may protrude outward from the second electrode 220. As the second electrode 220 is exemplified as a negative electrode, the second tab 320 may serve as a negative electrode tab of the secondary battery 2. However, when the second electrode 220 is a positive electrode, the second tab 320 may serve as a positive electrode tab of the secondary battery 2.

For example, the second tab 320 may extend from the second electrode220 in the first direction. That is, the second tab 320 may extend toward the opening 160 inside the case 100.

The first tab 310 and the second tab 320 may be disposed to be spaced part from each other in the second direction (e.g., the Y-axis direction). As an example, the second tab 320 may be disposed at a predetermined distance from the first tab 310 in the second direction.

The second tab 320 according to the present embodiment may have the shape of a foil extending from the second uncoated portion 222 of the second electrode 220 in the first direction. The second tab 320 may have a substantially rectangular shape. However, the shape of the second tab 320 may be designed to have various shapes.

The second tab 320 may be formed integrally with the second electrode 220. For example, the second tab 320 may be the remaining area of the second uncoated portion 222, which remains after a part of the second uncoated portion 222 is cut or removed by notching processing, etc. In other embodiments, the second tab 320 may be manufactured separately from the second electrode 220 and then connected to the second uncoated portion 222 by welding, etc. Materials of the second tab 320 and the second electrode 220 may be the same.

The second tab 320 may be provided as a plurality of second tabs. The number of second tabs 320 and the number of second electrodes 220 may be the same. Each second tab 320 may extend from the second uncoated portion 222 of the second electrode 220. Neighboring second tabs 320 may be disposed to face each other in the third direction (e.g., the X-axis direction). The neighboring second tabs 320 may be disposed in parallel. Accordingly, the second tab 320 according to the present embodiment may be an assembly of the plurality of second tabs 320 stacked in the third direction. The neighboring second tabs 320 may be in contact with each other and may also be spaced apart from each other by a thickness of the separator 230.

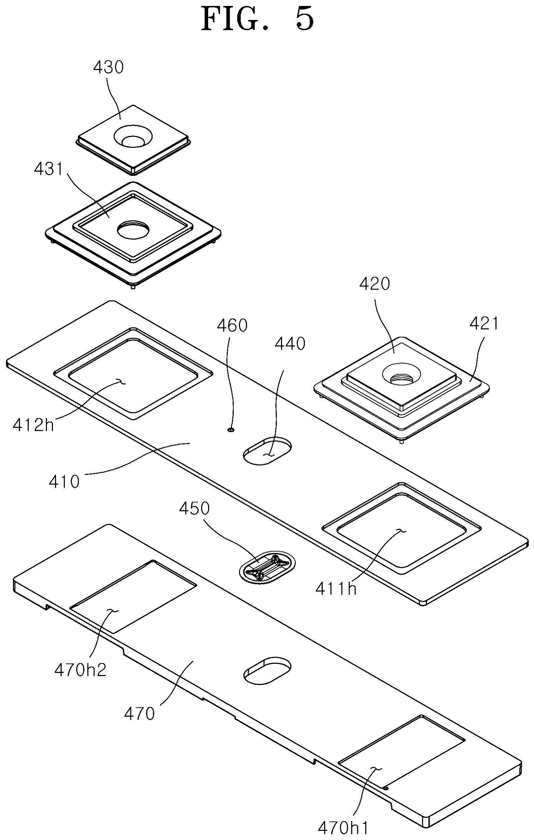

FIG. 5 is a schematic exploded perspective view illustrating a configuration of a cap assembly according to an embodiment of the present disclosure.

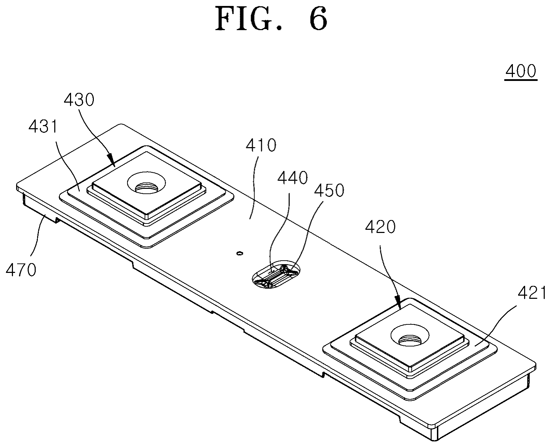

FIG. 6 is a schematic perspective view illustrating the configuration of the cap assembly according to an embodiment of the present disclosure.

A battery pack 1 (e.g., including the battery pack 1 described in FIGS. 1 to 4) according to an embodiment of the present disclosure includes a housing 10 and a plurality of secondary batteries 2 accommodated in the housing 10.

A secondary battery 2 (e.g., including the secondary battery 2 described in FIGS. 1 to 4) according to an embodiment of the present disclosure includes a case 100, an electrode assembly 200 accommodated in the case 100, and a cap assembly 400 coupled to an opening 160 of the case 100.

An electrode assembly 200 (e.g., including the electrode assembly 200 described in FIGS. 1 to 4) according to an embodiment of the present disclosure may include a first electrode 210, a second electrode 220, and a separator 230 disposed between the first electrode 210 and the second electrode 220. The first electrode 210, the separator 230, and the second electrode 220 may be provided as a plurality of first electrodes, separators, and second electrodes respectively.

The cap assembly 400 according to an embodiment of the present disclosure includes terminals (e.g., including the first terminal 420 and the second terminal 430) connected to electrodes (e.g., including the first electrode 210 and the second electrode 220) and is coupled to the opening 160 of the case 100.

The cap assembly 400 may be coupled to the case 100 to seal the case 100. The cap assembly 400 may be disposed to face the electrode assembly 200 in the first direction.

For example, the cap assembly 400 may include the cap plate 410, the first terminal 420, and the second terminal 430.

The cap plate 410 may form an approximate exterior of the cap assembly 400 and entirely support the first terminal 420 and the second terminal 430.

For example, the cap plate 410 may be formed to have a flat plate shape. The cap plate 410 may be disposed in the opening 160 of the case 100. The cap plate 410 may be disposed to face the electrode assembly 200 in the first direction. That is, the cap plate 410 may be disposed at a location that is spaced a predetermined distance from the electrode assembly 200 in the first direction. The cap plate 410 may be disposed parallel to the bottom portion 110 of the case 100.

The cap plate 410 may be seated on an upper end portion of the case 100, more specifically, upper end portions of the front portion 120, the rear portion 130, the first side portion 140, and the second side portion 150. The cap plate 410 may be connected to the case 100 by various types of coupling methods such as welding, bolting, fitting, and the like.

The first terminal 420 may protrude outward from the cap plate 410. The first terminal 420 may be electrically connected to the first electrode 210. As the first electrode 210 according to the present embodiment serves as a positive electrode, the first terminal 420 may be exemplified as a positive electrode terminal of the secondary battery 2.

For example, the first terminal 420 may be inserted into the cap plate 410. An upper end portion of the first terminal 420 may protrude from the cap plate 410 in the first direction. FIGS. 5 and 6 illustrate an example in which the first terminal 420 has a rectangular cross-sectional shape, but the cross-sectional shape of the first terminal 420 may be designed to have various shapes such as a circle, oval, polygon, and the like. The first terminal 420 may be formed of an electrically conductive material such as aluminum, nickel, copper, or the like.

A first gasket 421 may be installed between the cap plate 410 and the first terminal 420. The first gasket 421 may electrically insulate the cap plate 410 and the first terminal 420 and block moisture or foreign substances from being introduced between the cap plate 410 and the first terminal 420.

For example, the first gasket 421 may be fixed to an insulating plate 470 by various types of coupling methods such as fitting, welding, bolting, adhesion, heat fusion, and the like.

For example, the first gasket 421 may include an insulating material. The first gasket 421 may be fixed between the cap plate 410 and the first terminal 420 by pressing, injection, adhesion, etc.

The second terminal 430 may protrude outward from the cap plate 410 at a location that is spaced apart from the first terminal 420. The second terminal 430 may be electrically connected to the second electrode 220. As the second electrode 220 according to the present embodiment serves as a negative electrode, the second terminal 430 may be exemplified as a negative electrode terminal of the secondary battery 2.

For example, the second terminal 430 may be inserted into the cap plate 410. An upper end portion of the second terminal 430 may protrude from the cap plate 410 in the first direction. FIGS. 5 and 6 illustrate an example in which the second terminal 430 has a rectangular cross-sectional shape, but the cross-sectional shape of the second terminal 430 may be designed to have various shapes such as a circle, oval, polygon, and the like. The second terminal 430 may be formed of an electrically conductive material such as aluminum, nickel, copper, or the like.

The second terminal 430 may be disposed at a location that is spaced a predetermined distance from the first terminal 420 in the second direction.

A second gasket 431 may be installed between the cap plate 410 and the second terminal 430. The second gasket 431 may electrically insulate the cap plate 410 and the second terminal 430 and block moisture or foreign substances from being introduced between the cap plate 410 and the second terminal 430.

For example, the second gasket 431 may be fixed to the insulating plate 470 by various types of coupling methods such as fitting, welding, bolting, adhesion, heat fusion, and the like.

For example, the second gasket 431 may include an insulating material. The second gasket 431 may be fixed between the cap plate 410 and the second terminal 430 by pressing, injection, adhesion, etc.

For example, the cap assembly 400 may further include a vent hole 440 and a vent 450.

For example, the vent hole 440 may be formed to have the shape of a hole that vertically passes through both surfaces of the cap plate 410 in the first direction. The vent hole 440 may serve as a component that provides a path along which flames, gas, smoke, or the like generated inside the case 100 are discharged to the outside of the case 100 during thermal runaway of the secondary battery 2 due to overcurrent, etc. The vent hole 440 may be disposed between the first terminal 420 and the second terminal 430. The cross-sectional shape of the vent hole 440 may be designed to have various shapes such as an oval, circle, polygon, and the like.

The vent 450 may be installed in the vent hole 440 and opened and closed in response to a change in internal pressure of the case 100. That is, the vent 450 may close the vent hole 440 during the normal operation of the secondary battery 2 to block an electrolyte inside the case 100 from leaking out of the case 100 or moisture, foreign substances, and the like from entering the case 100. The vent 450 may open the vent hole 440 during thermal runaway of the secondary battery 2 to guide flames, gas, smoke, or the like generated inside the case 100 to be discharged to the outside of the case 100.

For example, the vent 450 may be formed to have a substantially plate shape. The vent 450 may be fixed to the cap plate 410 by various types of coupling methods such as welding, bolting, fitting, and the like. The vent 450 may be disposed inside the vent hole 440 or disposed to face the vent hole 440 in the first direction above or below the cap plate 410.

A thickness of the vent 450 in a direction parallel to the first direction may be smaller than a thickness of the cap plate 410. Accordingly, the vent 450 can easily rupture or break when the internal pressure of the case 100 increases. The vent 450 may include a notch formed to be concave toward the inside of the vent 450 so that the notch preferentially breaks when the internal pressure of the case 100 increases.

For example, the cap assembly 400 may further include an electrolyte inlet 460. The electrolyte inlet 460 may be formed to pass through the cap plate 410. A sealing plug may be installed in the electrolyte inlet 460. The electrolyte inlet 460 may be disposed to be spaced a predetermined distance apart from the vent hole 440 in the second direction or in a direction opposite to the second direction. The electrolyte inlet 460 may be disposed between the first terminal 420 and the second terminal 430.

For example, the cap assembly 400 may further include the insulating plate 470.

The insulating plate 470 may be disposed between the cap plate 410 and the electrode assembly 200. The insulating plate 470 can prevent direct contact between the cap plate 410 and the electrode assembly 200 to insulate the cap plate 410 and the electrode assembly 200. The insulating plate 470 may fix the position of the electrode assembly 200 inside the case 100. The insulating plate 470 can prevent the electrode assembly 200 from being damaged when the cap plate 410 is deformed toward the inside of the case 100 due to an external impact, etc.

For example, the insulating plate 470 may be disposed to face the electrode assembly 200 in the first direction inside the case 100. That is, the electrode assembly 200, the insulating plate 470, and the cap plate 410 may be disposed sequentially in the first direction. The insulating plate 470 may come into contact with one surface of the electrode assembly 200 from which the first tab 310 and the second tab 320 extend. The insulating plate 470 may include an insulating material.

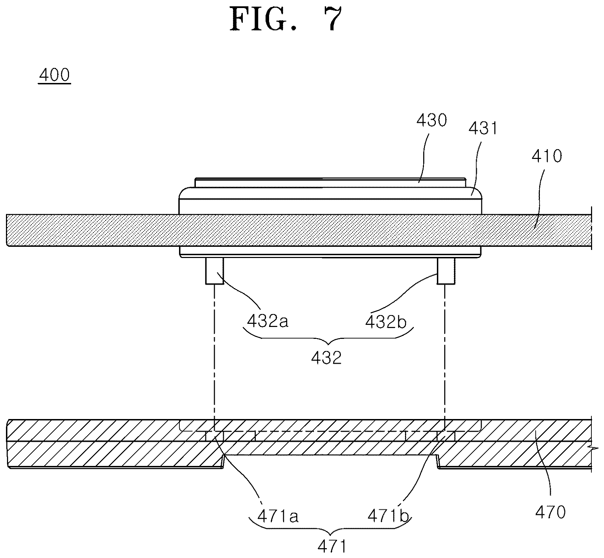

FIG. 7 is a schematic exploded side view illustrating the configuration of the cap assembly according to an embodiment of the present disclosure.

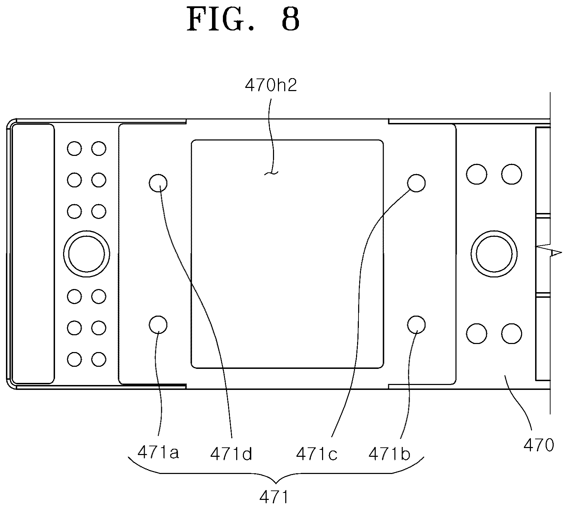

FIG. 8 is a schematic bottom view illustrating a configuration of an insulating plate according to an embodiment of the present disclosure.

A battery pack 1 (e.g., including the battery pack 1 described in FIGS. 1 to 6) according to an embodiment of the present disclosure includes a housing 10 and a plurality of secondary batteries 2 accommodated in the housing 10.

A secondary battery 2 (e.g., including the secondary battery 2 described in FIGS. 1 to 6) according to an embodiment of the present disclosure includes a case 100, an electrode assembly 200 accommodated in the case 100, and a cap assembly 400 coupled to an opening 160 of the case 100.

An electrode assembly 200 (e.g., including the electrode assembly 200 described in FIGS. 1 to 4) according to an embodiment of the present disclosure may include a first electrode 210, a second electrode 220, and a separator 230 disposed between the first electrode 210 and the second electrode 220.

As described in FIGS. 2 to 4, for example, the electrode assembly 200 includes a first tab 310 extending from the first electrode 210 and a second tab 320 extending from the second electrode 220. For example, the first tab 310 and the second tab 320 extend in the same direction.

A cap assembly 400 according to an embodiment of the present disclosure (e.g., including the cap assembly 400 provided in FIGS. 2, 3, 5 and 6) includes a cap plate 410, an insulating plate 470, and a coupling part that fixes the cap plate 410 and the insulating plate 470.

In addition, the cap assembly 400 may further include terminals (e.g., including the first terminal 420 and the second terminal 430 described in FIGS. 2, 3, 5, and 6) and gaskets (e.g., including the first gasket 421 and the second gasket 431 described in FIGS. 2, 3, 5 and 6).

The cap assembly 400 includes terminals connected to electrodes (e.g., including the first electrode 210 and the second electrode 220) and is coupled to the opening 160 of the case 100. In the description of the cap assembly, the same or similar contents as those described for FIGS. 2 to 6 may be omitted.

The cap plate 410 may form an approximate exterior of the cap assembly 400 and entirely support the first terminal 420 and the second terminal 430. In the description of the cap plate 410, the same or similar contents as those described for FIGS. 2 to 6 may be omitted.

The terminal is coupled to an upper portion of the cap plate 410. In the description of the terminal, the same or similar contents as those described for FIGS. 2 to 6 may be omitted. For example, the terminal includes the first terminal 420 and/or the second terminal 430. In FIGS. 7 and 8, the second terminal 430 among the terminals is illustrated as an example for convenience of description. Hereinafter, an example in which the terminal is the second terminal 430 will be described. However, the following description may also be applied to the first terminal 420 in the same or similar manner.

For example, the insulating plate 470 is located below the cap plate 410. For example, the insulating plate 470 may be located between the cap plate 410 and the electrode assembly 200 and may insulate between the cap plate 410 and the electrode assembly 200. In the description of the insulating plate 470, the same or similar contents as those described for FIGS. 2 to 6 may be omitted. In some embodiments, the insulating plate 470 may be on a surface of the cap plate 410.

For example, the cap plate 410 includes an insertion hole. The insertion hole provides a passage through which the electrode and the terminal are connected.

For example, the insertion hole includes a first insertion hole 411h (see FIG. 5) and/or a second insertion hole 412h (see FIG. 5). The first insertion hole 411h provides a passage through which the first electrode 210 and the first terminal 420 are connected. The first insertion hole 411h is formed in the cap plate 410 corresponding to the location of the first terminal 420. The second insertion hole 412h provides a passage through which the second electrode 220 and the second terminal 430 are connected. The second insertion hole 412h is formed in the cap plate 410 corresponding to (e.g., aligning with) the location of the second terminal 430.

In addition, for example, as illustrated in FIG. 8, the insulating plate 470 includes a connection hole. The connection hole is formed to correspond to (e.g., align with) the insertion hole. The connection hole provides a passage through which the electrode and the terminal are connected.

For example, the connection hole includes a first connection hole 470h1 (see FIG. 5) and/or a second connection hole 470h2. The first connection hole 470h1 provides a passage through which the first electrode 210 and the first terminal 420 are connected. The first connection hole 470h1 is formed in the insulating plate 470 corresponding to the location of the first terminal 420. The second connection hole 470h2 provides a passage through which the second electrode 220 and the second terminal 430 are connected. The second connection hole 470h2 is formed in the insulating plate 470 corresponding to (e.g., aligning with) the location of the second terminal 430.

As described above, the cap plate 410 may be spaced apart from the electrode assembly 200 and coupled to the opening 160 of the case 100.

In this case, the tabs (e.g., including the first tab 310 and the second tab 320) extend from first electrode 210 and/or the second electrode 220 toward the cap plate 410. For example, the first tab 310 extends toward the cap plate 410. For example, the second tab 320 extends toward the cap plate 410.

The tabs extend and are electrically connected to the sub-plates (e.g., including the first sub-plate 500 and the second sub-plate 600). For example, the first tab 310 is electrically connected to the first sub-plate 500, and current is collected by the first sub-plate 500. For example, the second tab 320 is electrically connected to the second sub-plate 600, and current is collected by the second sub-plate 600.

The current generated from the electrode is collected by the sub-plate and transmitted to the terminal. For example, the current generated from the first electrode 210 is collected by the first sub-plate 500 through the first tab 310. The first sub-plate 500 passes through the insulating plate 470 through the first connection hole 470h1. In addition, the first sub-plate 500 passes through the cap plate 410 through the first insertion hole 411h. For example, the first sub-plate 500 is electrically connected to the first terminal 420 and transmits current to the first terminal 420. In other embodiments, for example, the current generated from the second electrode 220 is collected by the second sub-plate 600 through the second tab 320. The second sub-plate 600 passes through the insulating plate 470 through the second connection hole 470h2. In addition, the second sub-plate 600 passes through the cap plate 410 through the second insertion hole 412h. For example, the second sub-plate 600 is electrically connected to the second terminal 430 and transmits current to the second terminal 430.

The gasket is disposed between the cap plate 410 and the terminal. In the description of the gasket, the same or similar contents as those described for FIGS. 2 to 6 may be omitted. For example, the gasket includes the first gasket 421 and/or the second gasket 431. In FIGS. 7 and 8, the second gasket 431 among the gaskets is illustrated as an example for convenience of description. Hereinafter, an example in which the gasket is the second gasket 431 will be described. However, the following description may also be applied to the first gasket 421 in the same or similar manner.

Accordingly, the cap assembly 400 may provide a structure that allows the terminal and the electrode to be electrically connected. In this case, the cap assembly 400 may be formed by integrating the cap plate 410 and the insulating plate 470.

For example, as illustrated in FIG. 7, the cap plate 410 disposed with and the gasket is disposed on the insulating plate 470 and coupled to the insulating plate 470.

To this end, for example, the coupling part that may extend from the cap plate 410 toward the insulating plate 470 and be fixed to the insulating plate 470.

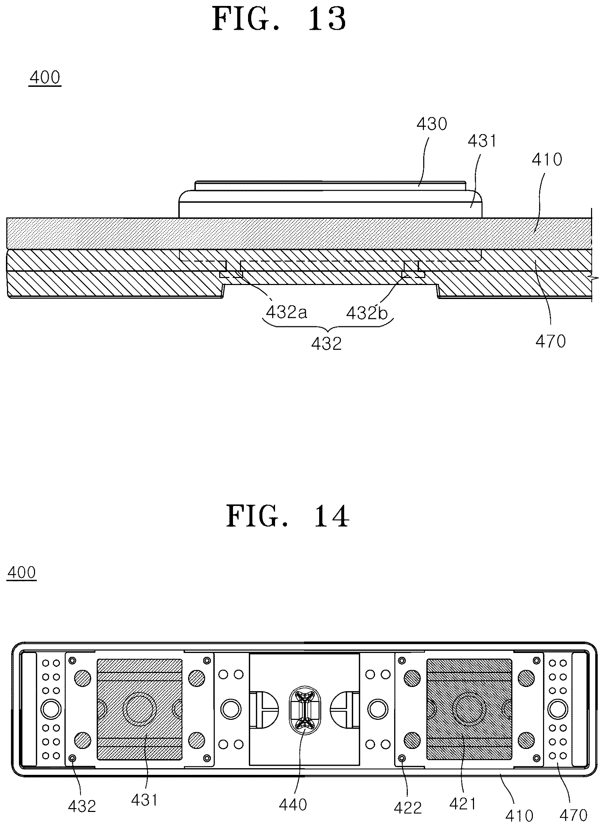

For example, the coupling part may be formed to extend from the first and second gaskets 421 and 431. For example, each of the first and second gaskets 421 and 431 include a coupling part that extends toward the insulating plate 470 and is fixed to the insulating plate 470. For example, the first gasket 421 includes a first coupling part 422 (see FIG. 14) that extends toward the insulating plate 470 and is fixed to the insulating plate 470. In addition or in other embodiments, as illustrated in FIG. 7, for example, the second gasket 431 includes a second coupling part 432 that extends toward the insulating plate 470 and is fixed to the insulating plate 470.

However, the coupling part according to an embodiment of the present disclosure may be formed separately from the first and second gaskets 421 and 431.

For example, the cap assembly 400 may further include a structure including a coupling part that is fixedly bonded to the cap plate 410 and extends toward the insulating plate 470. For example, the structure includes a main body formed in a plate shape, and a coupling part extending from one surface of the main body toward the insulating plate 470. In this case, the other surface of the main body may face the cap plate 410. For example, the other surface of the main body may be in surface contact with the cap plate 410. For example, the other surface of the main body may be fixed to the cap plate 410 by bolting, welding, fitting, heat fusion, etc.

For example, the structure including the coupling part may be formed by injection molding.

Hereinafter, a case in which the coupling part is formed to extend from the gasket will be described as an example.

For example, the cap plate 410 includes one or more coupling parts.

For example, the gasket includes one or more coupling parts. For example, the first gasket 421 includes the first coupling part 422. For example, as illustrated in FIG. 7, the second gasket 431 may include four second coupling parts 432. However, the number of coupling parts included in the gasket may vary. Hereinafter, a case in which the gasket has four coupling parts will be described as an example.

The plurality of coupling parts (e.g., 432a and 432b) may be positioned spaced apart from each other. For example, the plurality of coupling parts (e.g., 432a and 432b) may be positioned at each corner of the gasket (e.g., the second gasket 431).

For example, as illustrated in FIG. 8, the insulating plate 470 includes a through hole. For example, the through hole is formed to correspond to the coupling part. The through hole may be, for example, formed to have an average diameter of 2.0 mm to 2.5 mm.

For example, the insulating plate 470 includes a first through hole (not illustrated) and/or a second through hole 471.

For example, the first through hole is formed to correspond to the first coupling part 422. When a plurality of first through holes are present, the plurality of first through holes may be positioned to be spaced apart from each other. In this case, the number of first through holes may be formed to correspond to the number of first coupling parts 422. In other embodiments, the number of first through holes may be formed to be greater than or equal to the number of first coupling parts 422.

For example, the second through hole 471 is formed to correspond to the second coupling part 432. When a plurality of second through holes 471 are present, the plurality of second through holes (e.g., 471a, 471b, 471c, and 471d) may be positioned to be spaced apart from each other. In this case, the number of second through holes 471 may be formed to correspond to the number of second coupling parts 432. In other embodiments, the number of second through holes 471 may be formed to be greater than or equal to the number of second coupling parts 432.

The coupling part passes through the through hole. As the coupling part is inserted into the through hole, the cap plate 410 disposed with the terminal and the gasket may be fixed to the insulating plate 470. For example, the first coupling part 422 is inserted into the first through hole. In addition or alternatively, for example, the second coupling part 432 is inserted into the second through hole 471.

The coupling part extends from one surface of the insulating plate 470 toward the other surface. The coupling part passes through the insulating plate 470. For example, an end portion of the coupling part is thermally fused to the other surface of the insulating plate 470. For example, the end portion of the coupling part may be fused to the other surface of the insulating plate 470 by pressing and/or heating.

For example, the first coupling part 422 extends from the one surface of the insulating plate 470 toward the other surface. For example, the first coupling part 422 extends from an upper surface of the insulating plate 470 toward a lower surface thereof. For example, the first coupling part 422 passes through the insulating plate 470. For example, an end portion of the first coupling part 422 exposed to the other surface of the insulating plate 470 through the first through hole is thermally fused to the other surface of the insulating plate 470. For example, the end portion of the first coupling part 422 may be fused to the lower surface of the insulating plate 470 by pressing and/or heating. For example, the lower surface of the insulating plate 470 is a surface of the insulating plate 470, which faces the electrode assembly 200. Accordingly, the first gasket 421 may couple the cap plate 410 to the insulating plate 470.

In addition or in other embodiments, for example, the second coupling part 432 extends from the one surface of the insulating plate 470 toward the other surface. For example, the second coupling part 432 extends from the upper surface of the insulating plate 470 toward the lower surface thereof. For example, the second coupling part 432 passes through the insulating plate 470. For example, an end portion of the second coupling part 432 exposed to the other surface of the insulating plate 470 through the second through hole 471 is thermally fused to the other surface of the insulating plate 470. For example, the end portion of the second coupling part 432 may be fused to the lower surface of the insulating plate 470 by pressing and/or heating. Accordingly, the second gasket 431 may couple the cap plate 410 to the insulating plate 470.

In this way, the coupling part may fix the insulating plate 470 to the cap plate 410 through heat fusion.

In this case, to more easily perform heat fusion, for example, the coupling part includes a thermoplastic material. For example, the first coupling part 422 and/or the second coupling part 432 include a thermoplastic material.

For example, the coupling part includes a material having a melting point of 160 °C or higher. For example, the first coupling part 422 and/or the second coupling part 432 include a material having a melting point of 160 °C or higher. Accordingly, the coupling part (e.g., including the first coupling part 422 and the second coupling part 432) can be easily thermally fused and cannot be deformed by the heat generated during the charging and discharging process of the secondary battery 2.

For example, the coupling part (e.g., including the first coupling part 422 and the second coupling part 432) may include at least one of PET, PP, 6, 10 polyamide, 6 polyamide, 6, 6 nylon, PC, PTFE, PP-homo, PP-copolymer, PMMA, and a combination thereof.

With this structure, the secondary battery 2 according to an embodiment of the present disclosure may provide a cap assembly 400 in which the insulating plate 470 is stably fixed. In addition, according to an embodiment of the present disclosure, by omitting the process of attaching the insulating plate 470 to the electrode assembly 200, it is possible to increase the efficiency of the process of manufacturing the secondary battery 2 and/or reduce the cost of the secondary battery 2 manufacturing process.

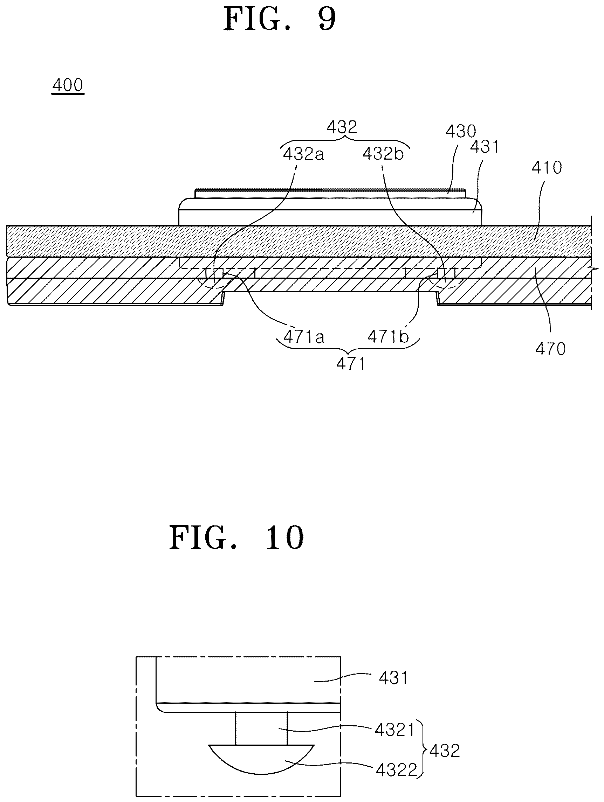

FIG. 9 is a schematic side view illustrating the configuration of the cap assembly according to an embodiment of the present disclosure.

FIG. 10 is a schematic enlarged view illustrating a configuration of a coupling part according to an embodiment of the present disclosure.

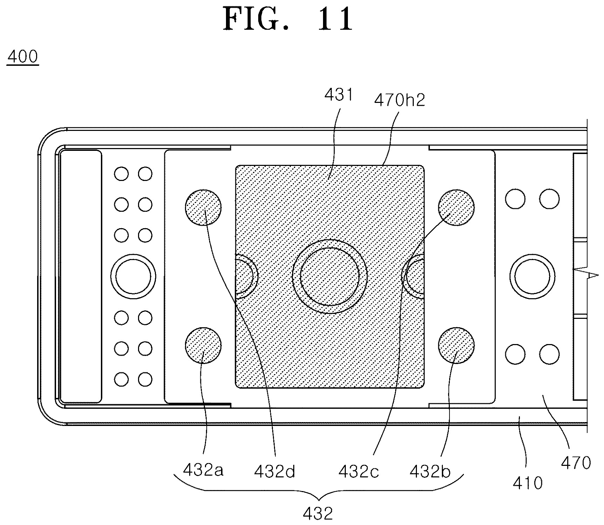

FIG. 11 is a schematic bottom view illustrating the configuration of the cap assembly according to an embodiment of the present disclosure.

A battery pack 1 (e.g., including the battery pack 1 described in FIGS. 1 to 8) according to an embodiment of the present disclosure includes a housing 10 and a plurality of secondary batteries 2.

A secondary battery 2 (e.g., including the secondary battery 2 described in FIGS. 1 to 8) according to an embodiment of the present disclosure includes a case 100, an electrode assembly 200, and a cap assembly 400.

A cap assembly 400 according to an embodiment of the present disclosure (e.g., including the cap assembly 400 provided in FIGS. 2, 3 and 5 to 8) includes a cap plate 410, an insulating plate 470, and a coupling part that fixes the cap plate 410 and the insulating plate 470.

In addition, the cap assembly 400 may further include terminals (e.g., including the first terminal 420 and the second terminal 430 described in FIGS. 2, 3 and 5 to 8) and gaskets (e.g., including the first gasket 421 and the second gasket 431 described in FIGS. 2 to 8).

As described in FIGS. 7 and 8, the coupling part extends from the cap plate 410 toward the insulating plate 470 and passes through the through hole formed in the insulating plate 470.

FIG. 9 illustrates a state in which the second coupling part 432 passes through the second through hole 471 and is thermally fused to the insulating plate 470. FIG. 10 separately illustrates only the thermally fused second coupling part 432. FIG. 11 illustrates another surface of the insulating plate 470 to which the second coupling part 432 is thermally fused.

As illustrated in FIG. 9, the coupling part is fixed to the insulating plate 470 through heat fusion.

As illustrated in FIG. 10, for example, the coupling part includes a body extending toward the insulating plate 470, and a support located on an end portion of the body, extending in a different direction from an extending direction of the body, and fixed to the insulating plate.

For example, the body extends from the cap plate 410. For example, one side of the body is connected to the cap plate 410. One side of the body is located on one surface of the insulating plate 470. For example, the other side of the body passes through the through hole. The other side of the body is located on the other surface of the insulating plate 470.

For example, the support is formed on the end portion (e.g., the end portion fused to the other surface of the insulating plate 470) of the body. For example, the support may correspond to an end portion of the other side of the body. For example, the support may be formed by thermally fusing the end portion of the body by pressing and/or heating.

For example, the first coupling part 422 includes a first body, and a first support located on an end portion of the first body.

For example, the first body extends from the cap plate 410 (or the first gasket 421). For example, one side of the first body is connected to the cap plate 410 (or the first gasket 421). The one side of the first body is located on one surface of the insulating plate 470. For example, the one side of the first body is located on the upper surface (e.g., in the orientation shown) of the insulating plate 470. For example, the other side of the first body passes through the first through hole. The other side of the first body is located on the other surface of the insulating plate 470. For example, the other side of the first body is located on the lower surface of the insulating plate 470.

For example, the first support is formed on the end portion of the first body. For example, the first support may correspond to an end portion of the other side of the first body. For example, the first support may be formed by thermally fusing the end portion of the first body by pressing and/or heating.

For example, the second coupling part 432 includes a second body 4321 (see FIG. 10), and a second support 4322 located on an end portion of the second body 4321.

For example, the second body 4321 extends from the cap plate 410 (or the second gasket 431). For example, one side of the second body 4321 is connected to the cap plate 410 (or the second gasket 431). The one side of the second body 4321 is located on one surface of the insulating plate 470. For example, the one side of the second body 4321 is located on the upper surface of the insulating plate 470. For example, the other side of the second body 4321 passes through the second through hole 471. The other side of the second body 4321 is located on the other surface of the insulating plate 470. For example, the other side of the second body 4321 is located on the lower surface (e.g., in the orientation shown) of the insulating plate 470.

For example, the second support 4322 is formed on the end portion of the second body 4321. For example, the second support 4322 may correspond to an end portion of the other side of the second body 4321. For example, the second support 4322 may be formed by thermally fusing the end portion of the second body 4321 by pressing and/or heating.

For example, the support extends radially from the end portion of the body.

In this case, "radially" refers to a form that extends in all directions from the end portion of the body. In this case, "radially" may be a form that extends the same length in all directions from the end portion of the body (e.g., forming a lower part of a sphere). Alternatively, "radially" may be a form in which at least a part extends a different length in all directions from the end portion of the body.

For example, the support may be formed to be greater than the through hole. For example, an area of the support facing the insulating plate 470 may be greater than an area of the through hole. Accordingly, the support is caught at the through hole to fix the gasket to the insulating plate 470.

For example, the first support may extend radially from the end portion of the first body. Accordingly, the first support may be caught T the first through hole to fix the first gasket 421 to the insulating plate 470.

In other embodiments, as illustrated in FIGS. 9 to 11, for example, the second support 4322 may extend radially from the end portion of the second body 4321. For example, the second support 4322 may be formed to be greater than (e.g., larger than) the second through hole 471. For example, an area of the second support 4322 facing the insulating plate 470 may be greater than an area of the second through hole 471. Accordingly, the second support 4322 may be caught at the second through hole 471 to fix the cap plate 410 to the insulating plate 470.

In this case, for example, the second coupling part 432 may be formed as a plurality of second coupling parts. For example, four second coupling parts 432 may be formed. In this case, each of the second coupling parts 432a, 432b, 432c, and 432d may be respectively coupled to a plurality of second through holes (e.g., 471a and 471b) so that the cap plate 410 is fixed to the insulating plate 470.

Through such a structure, the first coupling part 422 and the second coupling part 432 may be more firmly fixed to the insulating plate 470.

However, the shape of the thermally fused support (e.g., 4322) may be formed through heat fusion and formed in any shape that can fix the cap plate 410 and the insulating plate 470.

For example, the support extends in a direction orthogonal to an extending direction of the body from the end portion of the body that passes through the through hole 471. Through such a structure, the first coupling part 422 and the second coupling part 432 may be more easily fixed to the insulating plate 470.

With this structure, the secondary battery 2 according to an embodiment of the present disclosure may provide a cap assembly 400 in which the insulating plate 470 is stably fixed. In addition, according to an embodiment of the present disclosure, by omitting the process of attaching the insulating plate 470 to the electrode assembly 200, it is possible to increase the efficiency of the process of manufacturing the secondary battery 2 and/or reduce the cost of the secondary battery 2 manufacturing process.

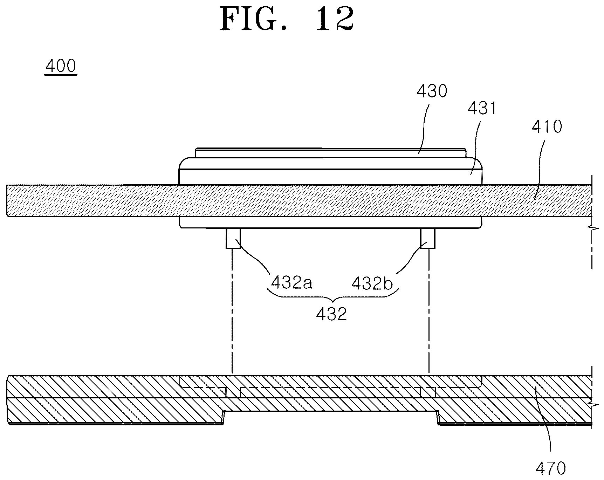

FIG. 12 is a schematic exploded side view illustrating the configuration of the cap assembly according to an embodiment of the present disclosure.

FIG. 13 is a schematic side view illustrating the configuration of the cap assembly according to an embodiment of the present disclosure.

A battery pack 1 (e.g., including the battery pack 1 described in FIGS. 1 to 11) according to an embodiment of the present disclosure includes a housing 10 and a plurality of secondary batteries 2.

A secondary battery 2 (e.g., including the secondary battery 2 described in FIGS. 1 to 11) according to an embodiment of the present disclosure includes a case 100, an electrode assembly 200, and a cap assembly 400.

A cap assembly 400 according to an embodiment of the present disclosure (e.g., including the cap assembly 400 provided in FIGS. 2, 3 and 5 to 11) includes a cap plate 410, an insulating plate 470, and a coupling part that fixes the cap plate 410 and the insulating plate 470.

In addition, the cap assembly 400 may further include terminals (e.g., including the first terminal 420 and the second terminal 430 described in FIGS. 2, 3, 5 to 7, 9 to 11) and gaskets (e.g., including the first gasket 421 and the second gasket 431 described in FIGS. 2, 3, 5 to 7 and 9 to 11).

FIGS. 7 to 11 illustrate an example in which the insulating plate 470 includes the through hole (e.g., 471) and the first and second coupling parts (e.g., 422 and 432) are fixed to the insulating plate (470) after passing through the through hole (e.g., 471). However, for example, an embodiment of the present disclosure may be applied even when the through hole (e.g., 471) is not formed in the insulating plate 470. FIGS. 11 to 13 illustrate such an example.

Meanwhile, as described above, the insulating plate 470 includes the connection hole to provide the connection passage between the terminal and the electrode. For example, the insulating plate 470 includes the first connection hole 470h1 and/or the second connection hole 470h2 (see FIG. 5).

For example, as described in FIGS. 9 to 11, the coupling part includes the body extending toward the insulating plate 470, and the support located on the end portion of the body, extending in a different direction (an extending direction) from the body, and fixed to the insulating plate 470. In the description of the coupling part, the same or similar contents as those described for FIGS. 9 to 11 may be omitted.

For example, the body may extend along the connection hole formed in the insulating plate 470.

For example, the body extends from the cap plate 410. For example, one side of the body is connected to the cap plate 410. One side of the body is located on one surface of the insulating plate 470. For example, the other side (e.g. the end portion) of the body passes through (or extends along) the connection hole. The other side of the body is located on the other surface of the insulating plate 470.

For example, the support is formed on the end portion of the body. For example, the support may correspond to an end portion of the other side of the body. For example, the support may be formed by thermally fusing the end portion of the body by pressing and/or heating. For example, the support extends from the end portion of the body in a direction orthogonal to an extending direction of the body.

For example, the first coupling part 422 includes the first body extending from the cap plate 410 toward the insulating plate 470, and the first support located on the end portion of the first body, extending in a different direction from the first body, and fixed to the insulating plate 470.

For example, the first body may extend along the first connection hole 470h1 formed in the insulating plate 470.

For example, the first body extends from the cap plate 410 (or the first gasket 421). For example, one side of the first body is connected to the cap plate 410 (or the first gasket 421). The one side of the first body is located on one surface of the insulating plate 470. For example, the other side of the first body passes through (or extends along) the first connection hole 470h1. The other side of the first body is located on the other surface of the insulating plate 470.

For example, the first support is formed on the end portion of the first body. For example, the first support may correspond to an end portion of the other side of the first body. For example, the first support may be formed by thermally fusing the end portion of the first body by pressing and/or heating. For example, the first support may extend from the end portion of the first body in the orthogonal direction, orthogonal to an extending direction of the body. For example, the first support may extend from the end portion of the first body in a direction in which the first connection hole 470h1 is not formed. The first support may extend in a different direction from the orthogonal direction, orthogonal to an extending direction of the first body so that the cap plate 410 is fixed to the insulating plate 470.

In addition or in other embodiments, the second coupling part 432 includes the second body 4321 extending from the cap plate 410 toward the insulating plate 470, and the second support 4322 located on the end portion of the second body 4321, extending in a different direction from the second body 4321, and fixed to the insulating plate 470.

For example, the second body 4321 may extend along the second connection hole 470h2 formed in the insulating plate 470.

For example, the second body 4321 extends from the cap plate 410 (or the second gasket 431). For example, one side of the second body 4321 is connected to the cap plate 410 (or the second gasket 431). The one side of the second body 4321 is located on one surface of the insulating plate 470. For example, the other side of the second body 4321 passes through (or extends along) the second connection hole 470h2. The other side of the second body 4321 is located on the other surface of the insulating plate 470.

For example, the second support 4322 is formed on the end portion of the second body 4321. For example, the second support 4322 may correspond to (e.g., extend from) the end portion of the other side of the second body 4321. For example, the second support 4322 may be formed by thermally fusing the end portion of the second body 4321 by pressing and/or heating. For example, the second support 4322 may extend from the end portion of the second body 4321 in the direction orthogonal to an extending direction of the second body 4321. For example, the second support 4322 may extend from the end portion of the second body 4321 in a direction in which the second connection hole 470h2 is not formed. The second support 4322 may extend in a different direction from an extending direction the second body 4321 so that the cap plate 410 is fixed to the insulating plate 470.

Through such a structure, according to an embodiment of the present disclosure, it is possible to implement a structure in which the insulating plate 470 and the cap plate 410 are fixed even when a separate through hole is not formed in the insulating plate 470. In addition, the secondary battery 2 according to an embodiment of the present disclosure can be manufactured through a simpler process, and/or the manufacturing time and manufacturing cost of the secondary battery 2 can be reduced.

FIG. 14 is a schematic bottom view illustrating the configuration of the cap assembly according to an embodiment of the present disclosure.

A battery pack 1 (e.g., including the battery pack 1 described in FIGS. 1 to 13) according to an embodiment of the present disclosure includes a housing 10 and a plurality of secondary batteries 2.

A secondary battery 2 (e.g., including the secondary battery 2 described in FIGS. 1 to 13) according to an embodiment of the present disclosure includes a case 100, an electrode assembly 200, and a cap assembly 400.

As described in FIGS. 1 to 6, the electrode includes the first electrode 210 and the second electrode 220.

For example, the electrode assembly 200 includes the first tab 310 extending from the first electrode 210 and connected to the first electrode 210, and the second tab 320 extending from the second electrode 220, spaced apart from the first tab 310, and connected to the second electrode 220. For example, the first tab 310 and the second tab 320 extend in the same direction.

In this way, as the first tab 310 and the second tab 320 extend in the same direction, the secondary battery 2 may have an insufficient space for fixing the insulating plate 470 that insulates between the cap assembly 400 and the electrode assembly 200.

A cap assembly 400 (e.g., including the cap assembly 400 described in FIGS. 2, 3 and 5 to 13) according to an embodiment of the present disclosure solves such a problem.

A cap assembly 400 according to an embodiment of the present disclosure (e.g., including the cap assembly 400 provided in FIGS. 2, 3 and 5 to 13) includes a cap plate 410, an insulating plate 470, and a coupling part that fixes the cap plate 410 and the insulating plate 470.

In addition, the cap assembly 400 may further include terminals (e.g., including the first terminal 420 and the second terminal 430 described in FIGS. 2, 3, 5 to 7, 9 and 11 to 13) and gaskets (e.g., including the first gasket 421 and the second gasket 431 described in FIGS. 2, 3, 5 to 7 and 9 to 13).

For example, the first coupling part 422 may be thermally fused to the other surface of the insulating plate 470 to fix the cap plate 410 and the insulating plate 470.

In addition or in other embodiments, the second coupling part 432 may be thermally fused to the other surface of the insulating plate 470 to fix the cap plate 410 and the insulating plate 470.

In this case, each of the first coupling part 422 and the second coupling part 432 may be thermally fused to the other surface of the insulating plate 470 to fix the cap plate 410 and the insulating plate 470.

However, for example, one of the first coupling part 422 and the second coupling part 432 may be thermally fused to the other surface of the insulating plate 470 to fix the cap plate 410 and the insulating plate 470.

Through such a structure, the cap assembly 400 according to an embodiment of the present disclosure may provide a structure in which the cap plate 410 and the insulating plate 470 are integrated. In addition, the secondary battery 2 and/or a battery pack 1 according to an embodiment of the present disclosure can have improved stability and/or improved process efficiency/costs.

According to the present disclosure, an insulating plate can be fixed without shaking even when an upper space inside a secondary battery is reduced.

According to the present disclosure, measures to increase the process efficiency of a cap assembly, a secondary battery, and/or a battery pack and/or reduce process costs are provided.

The present disclosure is directed to providing a cap assembly in which a cap plate and an insulating plate separating the cap plate from the electrode assembly are integrated, a secondary battery including the cap assembly, and/or a battery pack including the secondary battery.

The present disclosure is also directed to providing a cap assembly that does not require a process of attaching an insulating plate inside a secondary battery, the secondary battery including the cap assembly, and/or a battery pack including the secondary battery.

Effects of the present disclosure including other effects that are not specifically mentioned herein will be clearly understood by those skilled in the art based on the description of the present disclosure below.

Although the present disclosure has been described with reference to embodiments illustrated in the drawings, these are merely illustrative, and those skilled in the art will understand that various modifications and equivalent of other embodiments are possible therefrom.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

## Claims

1. A cap assembly, comprising:
a cap plate;
an insulating plate on a surface of the cap plate; and
a coupling part extending from the cap plate toward the insulating plate, the coupling part being fixed to the insulating plate.

2. The cap assembly as claimed in claim 1, wherein the coupling part includes:
a body extending toward the insulating plate; and
a support on an end portion of the body, the support extending in a different direction from an extending direction of the body and is fixed to the insulating plate.

3. The cap assembly as claimed in claim 2, wherein:
the insulating plate includes a through hole, and
the support extends radially from the end portion of the body that has passed through the through hole.

4. The cap assembly as claimed in claim 2, wherein:
the insulating plate includes a through hole, and
the support extends from the end portion of the body that has passed through the through hole in a direction orthogonal to the extending direction of the body.

5. The cap assembly as claimed in any of claims 2 to 4, wherein the support is formed on the end portion of the body fused to a surface of the insulating plate.

6. The cap assembly as claimed in any preceding claim, wherein the coupling part includes a thermoplastic material.

7. The cap assembly as claimed in any preceding claim 1, wherein the coupling part includes a material having a melting point of 160 °C or higher.

8. A secondary battery, comprising:
a case;
an electrode assembly inside the case, the electrode assembly including electrodes; and
a cap assembly according to any preceding claim, further including terminals connected to the electrodes, the cap assembly being coupled to an opening of the case,
wherein the cap plate is coupled to the opening of the case, the cap plate having an insertion hole providing a passage through which the electrodes and the terminals are connected,
the insulating plate is between the cap plate and the electrode assembly.

9. The secondary battery as claimed in claim 8, wherein:
the electrodes include a first electrode and a second electrode,
the electrode assembly further includes a first tab extending from the first electrode, the electrode assembly being connected to the first electrode, and a second tab extending from the second electrode, the second tab being spaced apart from the first tab and connected to the second electrode, and
the first tab and the second tab extend in a same direction.

10. The secondary battery as claimed in claim 9, wherein:
the terminals include a first terminal connected to the first electrode and a second terminal connected to the second electrode, the first terminal and the second terminal being spaced apart from each other, and
the secondary battery further comprises:
a first sub-plate between the electrode assembly and the cap assembly, the first sub-plate connecting the first tab to the first terminal; and
a second sub-plate between the electrode assembly and the cap assembly, the second sub-plate connecting the second tab to the second terminal.

11. A battery pack, comprising:
a housing; and
a plurality of secondary batteries inside the housing,
wherein each of the plurality of secondary batteries comprises the secondary battery according to claims 8 to 10.

12. The battery pack as claimed in claim 11, wherein the coupling part includes an end portion fused to a surface of the insulating plate.
